# EUROPEAN PATENT SPECIFICATION

(11) **EP 2 208 604 B1**
(45) Date of publication and mention of the grant of the patent: **14.03.2012**
(21) Application number: 10000389.6
(22) Date of filing: 18.01.2010
(51) Int. Cl.: B29C 47/10, B65D 65/42, C08J 7/04

(54) **Packaging pouch with food flow properties**
Verpackungsbeutel mit Lebensmittelflusseigenschaften
Sachet d'emballage avec des propriétés d'écoulement d'aliments

(30) Priority: 19.01.2009 EP 09405011
(43) Date of publication of application: 21.07.2010
(73) Proprietor: Amcor Flexibles Kreuzlingen Ltd., 8280 Kreuzlingen (CH)
(72) Inventor: Bertolino, Noemi, 37138 Verona (IT); Della Torre, Andrea, 21052 Busto Arsizio (VA) (IT); Orsini, Lorenzo, 54037 Massa (IT)
(74) Representative: Gernet, Samuel Andreas

(56) References cited:
- WO-A-00/39215
- WO-A1-01/98074
- US-A- 5 181 610
- DATABASE WPI Week 200627 Thomson Scientific, London, GB; AN 2006-257834 XP002537004 -& JP 2006 089073 A (HOKKAI SEIKAN KK) 6 April 2006 (2006-04-06)
- DATABASE WPI Week 200546 Thomson Scientific, London, GB; AN 2005-447584 XP002576491 -& JP 2005 145493 A (DAINIPPON PRINTING CO LTD) 9 June 2005 (2005-06-09)

## Description

The invention relates to a packaging pouch according to the preambule of claim 1.

Nowadays cooked and ready meals for human and pet consumption are really common. A conspicuous part of such food is sold in flexible flat/pillow or stand-up pouches. Pouches are produced and filled in line or as a two-step production. During the filling process several ingredients are inserted in solid and liquid states while the pouch is kept open. After filling, the pouch is sealed on the top and may pass through a thermal process for pasteurisation or sterilisation. However, part of the ingredients during filling can touch the Inner walls of the pouch, and if this material does not flow down inside the pouch quickly, it will contaminate the sealing area and the pouch will not be sealed completely compromising food integrity.

A possible technological solution is to use ultrasonic sealing tool that is normally an expensive investment and not suitable for all material structures. With the same principle, when the consumer will empty the pouch, part of the meal will get in contact with pouch walls, and food which is not fast flowing out of the pouch will be quite inconvenient for the consumer that would need to use tools or shake/squeeze the pouch with the risk to spread food around. In case of pet food, consumers are even less keen in using a tool or touch the food by trying to empty the pouch. This explains why having a pouch exhibiting easy and fast flowing of the food along the inner walls can strongly reduce rejections during filling, decrease food safety risk and be an important consumer convenience feature in the field of ready meals and wet pet food in pouches. As an example, ready meal pouches may contain meat, vegetables, rice In gravy

The aforementioned objective is achieved by way of the invention with a packaging pouch with the features of claim 1.

Preferably the surface tension of the layer or the surface coating is 21 mN/m or less.

The pouch can withstand thermo cycles up to 135°C for 90 min. This solution provides easy flow property also In case of aseptic filling application.

To measure easy flow properties, there does not exist a science method such as for measuring the surface tension. However, it has been found that easy flow properties are correlated to surface tension. Therefore, a methodology and a tool to evaluate easy flowing has been developed by the inventors and will be explained later.

The layer of the film forming the pouch inner walls or the surface coating on the film preferably contains 0,5 to 3 wt.% dialkyl amide perfluoropolyether

The layer of the film forming the pouch Inner walls may be a coextruded layer or a monolayer. Since the additives based on a molecule and or molecules system migrate to the surface of layer of the film forming the pouch inner walls being in contact with food, an enrichment of additives in a surface layer takes place, and consequently the concentration of additives in this surface layer will increase with time and may therefore be higher than the overall concentration of the additive in the layer.

A preferred dialkyl amide perfluoropolyether has an average molecular weigth (NMR) of between 1600 Da and 2000 Da, preferably about 1800 Da.

Preferably the surface of the layer of the film forming the pouch inner walls is polypropylene or polyethylene based.

The molecule and or molecules system functionalised by siloxane and/or fluorinated groups can be part of an organic or inorganic additive or filler material contained In the layer of the film forming the pouch inner walls or the surface coating on the film providing easy food flow properties.

The layer of the film forming the pouch inner walls can be additivated with addive or filler during production through blown or cast extrusion such as non-oriented, mono- or biaxial oriented film.

The surface coating on the film can be applied by solvent based rotogravure or atmospheric plasma treatment.

The packaging pouch according to the present invention can be of any shape or design, e.g. a flat pouch or a stand-up pouch, a pouch in the form of a doypack, a pillow, or a cheerpack.

With the packaging pouch according to the present invention easy flow properties are active during filling, i.e. food processing, as well as during food emptying by the consumer when the food is consumed. or sauce added during filling and juice produced by the food during retort cooking. Pet food pouches may contain meat based food in jelly or gravy and juice produced during retort. Ready sauce pouches may be vegetable, meat or fat (eggs, butter) based and sterilised or pasteurised.

EP-A-1 808 291 discloses a packaging material made of thermoplastic polymers suitable for packaging foods. To prevent pasty and fatty foods from adhering to packaging material, a nonstick composition comprising a fatty ester of a polyhydric alcohol having at least one fatty acid radical per ester molecule with 19 or more carbon atoms is Incorporated into at least one selected area of a polymer packaging material. A permanent nonstick effect is observed even if the fatty acid ester is Included only in surface-close regions or layers of the packaging material. The outer layer in which the fatty acid ester additive is contained can be a sealing layer. The packaging preferably has the form of a pouch.

WO 2004/050357 A1 discloses a laminate useful in the manufacture of packages for containers, in particular ovenable resistant food containers. The laminate includes a substrate, preferably of a paperboard, and a food contact release layer comprising a blend of polymethylpentene and polypropylene bonded to one side of the substrate. The food contact release layer has a lower surface tension than the food product to come Into contact with the release layer and thus offers a good release from food products, particularly those containing high levels of starch and sugar.

WO 2005/092609 A1 discloses a coextruded biaxially oriented PET film with food release properties having a sealable skin layer comprising a hot melt adhesive resin. The skin layer may further comprise fatty aides, waxes or silicon oils and particulate substances such as silica, clay and calcium carbonate.

EP 1 174 457 A1 discloses a biaxially oriented polyester film with release properties in aqueous environment. The film, which Is used in metal cans as inner release coating, comprises a polyester in which ethylene terephthalate units and/or ethylene naphthalate units are the main structural components, and a wax compound and /or silicon compound.

US 6 528 134 B1 discloses a coextruded film with release and dead fold properties for packaging cheese. The film comprises three layers of polyethylene or polypropylene and glycerol monostearate as cheese release agent.

From the aforementioned prior art documents, packaging films having antistick or release properties are known. However, packaging materials having easy food flow properties have not been addressed so far in the prior art literature. Moreover, none of the aforementioned prior art documents refer to retort, pasteurisation or hot filling applications or aseptic conditions.

Easy flowing according to the present invention is different from antistick or release known In the prior art. Antistick or release means something blocked on the packaging that when removed will immediately fall down or out of the packaging. Easy flowing means continuous flow of a product with a velocity depending on the product, but as well on the property of the surface of the layer of the film or the coating forming the pouch inner walls being in contact with food.

The object of the present invention is to provide a packaging pouch made of a flexible mono or multilayer film for packaging viscous jelly and/or gravy matrix food, in which a thermo cycle such as retort, pasteurisation, hot filling or aseptic conditions are applicable, and which exhibits easy food flow properties of the pouch Inner walls being in contact with food. The surface layer of pouch inner walls being in contact with food are typically polypropylene or polyethylene based sealing layers.

The following laminates are examples of packaging materials suitable in the production of packaging pouches according to the present invention:
Polyester/adhesive/polyamide/adhesive/polypropylene
Polyester/adhesive/polyamide/adhesive/polyethylene
Polyester/adhesive/polyester/adhesive/polypropylene
Polyester/adhesive/polyester/adhesive/polyethylene
Polyester/adhesive/aluminium/adhesive/polypropylene
Polyester/adhesive/aluminium/adhesive/polyethylene
Polyester/adhesive/polyethylene
Polyester/adhesive/polypropylene
Polyester/adhesivelpolyester/adhesive/polyamlde/adhesive/polyethylene
Polyester/adhesive/polyeater/adhesive/polyamide/adhesive/polypropylene
Polyester/adhesive/aluminium/adhesive/ polyamide/adhesive/polypropylene

To provide barrier properties, polyester and/or polyamide of the above structures without aluminium can be as well coated with a ceramic material, such as SiOₓ or AlOₓ, or coated with an organic barrier material. Polyethylene and polypropylene films can be as well coextruded with EVOH and mono- or bi-oriented. Polyester films, such as PET films, can be metallised.

The polyethylene or polypropylene layer is a sealing layer forming the pouch inner walls.

Further advantages, features and details of the invention are revealed in the following description of preferred exemplified embodiments and with the aid of the drawing which shows schematically in
- Fig. 1: the apparatus used to evaluate easy flow properties;
- Fig. 2: the top view of a prior art laminate at the end of an easy flow test;
- Fig. 3: the top view of laminate according to the present invention at the end of the same easy flow test.

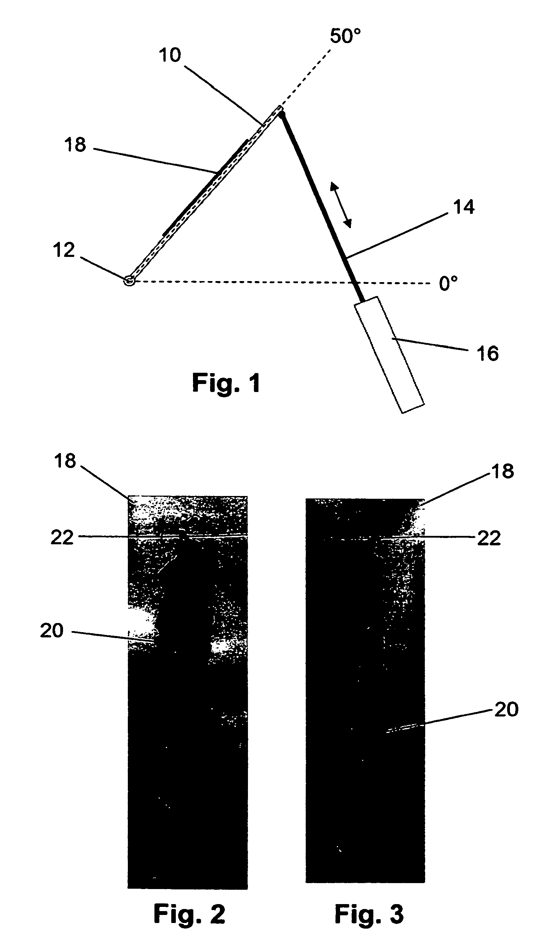

As shown in Fig.1, a lower end of a leaning table 10 is fixed to a hinge-joint 12. A piston 16 of a cylinder 14 is linked to an upper end of the leaning table 10. The piston 16 can be extended at a constant speed of 0.01 to 1 m/min.

Test strips 18 are fixed on the leaning table 10 in a horizontal starting position, i.e., the tilting angle of the leaning table 10 at the start of each test Is 0°. In this position, a portion of food 20 - In the present tests a portion of ketchup - is placed onto the surface of the test strip 18 at a starting line 22. Thereafter the leaning table is pivoted about the hinge-joint 12 from the starting position at 0° to and end position at a tilting angle of 50° within 3 minutes. Immediately when the tilting angle reaches 50°, photos of test strips are taken and visually analysed.

Figures 2 and 3 show a test strip each at the end of the test. The strip In Fig. 2 is a polypropylene film without additive, whereas the strip in Fig. 3 is a polypropylene film with an additive of 2 wt.% of a commercially available dialkyl amide perfluoropolyether having a molecular structure as CH₃(CH₂)₁₇HNOCCF₂O(CF₂CF₂O)ₚ(CF₂O)_{q}CF₂CONH(CH₂)₁₇CH₃, an average molecular weigth (NMR) of 1800 Da, a fluorine content of about 40%, a specific gravity at 20°C of 1.4 and a melting point at 50°C.

The film without additive (Fig. 2) shows a higher wettability compared to the film containing an additive according to the present invention (Fig. 3). The tall left by the ketchup is completely wetting the film without additive, whereas the tall left on the film with additive is much more compact and has almost completely moved down away from the starting line.

The test results clearly demonstrate the superiority of an additive according to the present invention on the easy flow properties.

## Claims

1. Packaging pouch made of a flexible mono or multilayer film for packaging viscous jelly and/or gravy matrix food, in which a thermo cycle such as retort, pasteurisation, hot filling or aseptic conditions are applicable,
**characterised in that**
the surface of a layer of the film forming the pouch inner walls or a surface coating on the film being in contact with food comprises 0,01 to 5 wt.% dialkyl amide perfluoropolyether with a molecular structure as CH₃(CH₂)₁₇HNOCCF₂O(CF₂CF₂O)ₚ(CF₂O)_{q}CF₂CONH(CH₂)₁₇CH₃ having an average molecular weight (NMR) of between 1000 Da and 3000 Da and a fluorine content of about 40% so that the surface tension of the layer or the surface coating on the layer is 24 mN/m or less and the pouch Inner walls being In contact with food exhibit easy flow properties.

2. Packaging pouch according to claim 1, wherein the layer of the film forming the pouch inner walls or the surface coating on the film contains 0,5 to 3 wt.% dialkyl amide perfluoropolyether.

3. Packaging pouch according to claim 1, wherein the alkyl amide having an average molecular weight (NMR) of between 1600 Da and 2000 Da, preferably about 1800 Da.

4. Packaging pouch according to anyone of claims 1 to 3, wherein the surface of the layer of the film forming the pouch inner walls is polypropylene or polyethylene based.

5. Packaging pouch according to anyone of claims 1 to 4, wherein the dialkyl amide perfluoropolyether is part of an organic or inorganic additive or filler material contained in the layer of the film forming the pouch inner walls or the surface coating on the film providing easy food flow properties.

6. Packaging pouch according to anyone of claims 1 to 5, wherein the layer of the film forming the pouch inner walls is additivated with addive or filler during production through blown or cast extrusion such as non-oriented, mono- or biaxial oriented film.

7. Packaging pouch according to anyone of claims 1 to 6, wherein the surface coating on the film is applied by solvent based rotogravure or atmospheric plasma treatment.

8. Packaging pouch according to anyone of the preceding claims in the form of a doypack, a stand-up pouch, a pillow, a flat pouch or a cheerpack.

## Patentansprüche

1. Verpackungsbeutel, hergestellt aus einer flexiblen ein- oder mehrschichtigen Folie zum Verpacken von zähen geleeähnlichen Lebensmitteln und/oder von Lebensmitteln mit saftiger Matrix, bei dem ein Wärmekreislauf wie Hitzesterilisation, Pasteurisation, Heißbefüllung oder Sterilität anwendbar ist,
**dadurch gekennzeichnet, dass**
die Oberfläche einer Schicht der Folie, die die Innenwände des Beutels bildet, oder eine Oberflächenbeschichtung auf der Folie, die mit Lebensmitteln in Berührung kommt, 0,01 bis 5 Gew.-% Dialkylamidperfluoropolyether mit einer Molekülstruktur CH₃(CH₂)₁₇HNOCCF₂O(CF₂CF₂O)ₚ(CF₂O)_{q}CF₂CONH(CH₂)₁₇CH₃ mit einem mittleren Molekulargewicht (NMR) zwischen 1000 Da und 3000 Da und einem Fluorgehaft von ungefähr 40% umfasst, sodass die Oberflächenspannung der Schicht oder der Oberflächenbeschichtung auf der Schicht 24 mN/m oder weniger beträgt und die Innenwände des Beutels, die mit Lebensmitteln in Berührung kommen, optimierte Gleiteigenschaften aufweisen.

2. Verpackungsbeutel nach Anspruch 1, wobei die Schicht der Folie, die die Innenwände des Beutels bildet, oder die Oberflächenbeschichtung auf der Folie 0,5 bis 3 Gew.-% Dialkylamidperfluoropolyether enthält.

3. Verpackungsbeutel nach Anspruch 1, wobei das Alkylamid ein mittleres Molekulargewicht (NMR) zwischen 1600 Da und 2000 Da aufweist, bevorzugter von ungefähr 1800 Da.

4. Verpackungsbeutel nach einem der Ansprüche 1 bis 3, wobei die Oberfläche der Schicht der Folie, die die Innenwände des Beutels bildet, auf Polypropylen oder Polyethylen basiert.

5. Verpackungsbeutel nach einem der Ansprüche 1 bis 4, wobei der Dialkylamidperfluoropolyether Teil eines organischen oder anorganischen Zusatzstoffs oder Füllstoffs ist, der in der Schicht der Folie, die die Innenwände des Beutels bildet, oder der Oberflächenbeschichtung auf der Folie enthalten ist und für optimierte Gleiteigenschaften gegenüber Lebensmitteln sorgt.

6. Verpackungsbeutel nach einem der Ansprüche 1 bis 5, wobei die Schicht der Folie, die die Innenwände des Beutels bildet, während der Herstellung über Schlauchfolienextrusion oder Gießfolienextrusion beispielsweise als unverstreckte, monoaxial oder biaxial verstreckte Folie mit dem Zusatzstoff oder Füllstoff versetzt wird.

7. Verpackungsbeutel nach einem der Ansprüche 1 bis 6, wobei die Oberflächenbeschichtung auf der Folie mittels Tiefdruck unter Verwendung von Lösemitteln oder mittels atmosphärischer Plasmabehandlung aufgebracht ist.

8. Verpackungsbeutel nach einem der vorhergehenden Ansprüche in Form eines Doypacks, eines Standbodenbeutels, eines Kissens, eines Flachbeutels oder eines Cheerpacks.

## Revendications

1. Poche d'emballage constituée d'un film mono- ou multi-couche flexible pour l'emballage d'un aliment de matrice de gelée et/ou de sauce visqueuse, dans laquelle un thermocycle, tel qu'une distillation, une pasteurisation, un remplissage à chaud ou des conditions aseptiques peuvent être appliquées,
**caractérisée en ce que**
la surface d'une couche du film formant les parois internes de la poche ou un revêtement de surface sur le film en contact avec l'aliment comprend de 0,01 à 5 % en masse de perfluoropolyéther de dialkylamide avec une structure moléculaire telle que CH₃(CH₂)₁₇HNOCCF₂O(CF₂CF₂O)ₚ(CF₂O)_{q}CF₂CONH(CH₂)₁₇CH₃ ayant une masse moléculaire moyenne (NMR) de 1 000 Da à 3 000 Da et une teneur en fluor d'environ 40 % de sorte que la tension superficielle de la couche ou du revêtement de surface sur la couche est de 24 mN/m ou inférieure et les parois internes de la poche étant en contact avec l'aliment présentent des propriétés d'écoulement facile.

2. Poche d'emballage selon la revendication 1, dans laquelle la couche du film formant les parois internes de la poche ou le revêtement de surface sur le film contient de 0,5 à 3 % en masse de perfluoropolyéther de dialkylamide.

3. Poche d'emballage selon la revendication 1, dans laquelle l'alkylamide présente une masse moléculaire moyenne (NMR) de 1 600 Da à 2 000 Da, de préférence d'environ 1 800 Da.

4. Poche d'emballage selon l'une quelconque des revendications 1 à 3, dans laquelle la surface de la couche du film formant les parois internes de la poche est à base de polypropylène ou de polyéthylène.

5. Poche d'emballage selon l'une quelconque des revendications 1 à 4, dans laquelle le perfluoroéther de diakylamide est une partie d'un additif organique ou inorganique ou un matériau de charge contenu dans la couche du film formant les parois internes de la poche ou le revêtement de surface sur le film fournissant des propriétés d'écoulement facile de l'aliment.

6. Poche d'emballage selon l'une quelconque des revendications 1 à 5, dans laquelle la couche du film formant les parois internes de la poche est additionnée d'un additif ou d'une charge pendant la production par soufflage ou extrusion de coulée, tel qu'un film non-orienté, mono- ou biaxialement orienté.

7. Poche d'emballage selon l'une quelconque des revendications 1 à 6, dans laquelle le revêtement de surface sur le film est appliqué par rotogravure à base de solvant ou traitement au plasma atmosphérique.

8. Poche d'emballage selon l'une quelconque des revendications précédentes dans la forme d'un doypack, d'une poche tenant debout, d'un coussin, d'une poche plate ou d'un cheerpack.
